# EUROPEAN PATENT APPLICATION

(11) **EP 4 138 521 A1**
(43) Date of publication of application: **22.02.2023**
(21) Application number: 21192277.8
(22) Date of filing: 20.08.2021
(51) Int. Cl.: H05B 47/175

(54) **EFFICIENT LOGICAL ASSIGNMENT OF DALI-2 OCCUPANCY SENSORS**

(71) Applicant: Siemens Schweiz AG, 8047 Zürich (CH)
(72) Inventor: Skoczylas, Piotr, 8910 Affoltern am Albis (CH); Bättig, Markus, 6012 Obernau (CH); Kyburz, Beat, 8913 Ottenbach (CH)
(74) Representative: Maier, Daniel Oliver

(57) **Abstract**

A Method and an arrangement for commissioning a DALI network for control lighting in a building, the DALI network comprising a DALI application controller, control gears, and input devices, wherein the DALI application controller provides a set of discovered, unassigned input devices and a set of engineered input devices, wherein a commissioning tool provides access to the respective sets of discovered, unassigned input devices, and engineered input devices. The method and the arrangement are in in particular applicable to commission DALI-2 occupancy sensors.

## Description

### FIELD OF THE INVENTION

The present invention relates generally to the technical field of building management systems or building automation systems comprising a plurality of building devices, e.g. BACnet devices. In particular the present invention relates to a method for commissioning a DALI network (e.g. DALI bus) for control lighting in a building, the DALI network comprising a DALI application controller, control gears (e.g. lamps, LED, dimmer), and input devices (e.g. occupancy sensors).

### BACKGROUND

Building automation systems are used to control devices in a building such as HVAC equipment, blind actuators, and lighting actuators. Building automation systems provide communication between and control of devices in a building. The DALI standard provides a protocol for digital communication between components of a lighting installation. In installations, a DALI control unit organizes and manages the information flow and the access of all components to the data line. DALI offers functionality that goes beyond the switching and dimming of individual DALI devices. For example, constant light control can be achieved via constant light control circuits can be set up via brightness sensors and complex light scenes can be compiled, stored and recalled.

Each DALI system contains at least one Application Controller (Master Device), up to 64 gears (e.g. lamps) and up to 64 input devices (pushbuttons defined in IEC 62386-301, analog input devices defined in IEC 62386-302, or others).
DALI system commissioning requires two basic steps:
1st step: each physical device needs to get a network address (so called DALI short address).
2nd step: each physical device must be localized and assigned to a logical device of the DALI Application Controller (device engineered in the building plan).

IEC 62386-102 defines the address assignment and localization procedures for gears and IEC 62386-103 for input devices. For input devices the DALI standard defines a random address allocation procedure and a specific IDENTIFY DEVICE command to trigger a blink or beep function to support the localization of an input device. This way the commissioner can request one after another a device to blink/beep until the wanted device answers and can be assigned. There are several problems with this setup for input devices:
1. Having to blink or beep every device one by one to find a specific device is very time-consuming and inefficient. Especially for large projects totaling hundreds of input devices.
2. In many cases using IDENTIFY DEVICE command on every device is error-prone, because multiple pushbuttons or dimming devices can be mounted close together in a wall, so a beep sound from these devices is hard to distinguish. Blinking LEDs are often small and covered by a transparent housing and difficult to see.

### SUMMARY OF THE INVENTION

The object of the invention is to provide an efficient method for commissioning a DALI network for control lighting in a building.

A first aspect of the invention is a method for commissioning a DALI network (e.g. DALI bus) for control lighting detection in a building, the DALI network comprising a DALI application controller, control gears (e.g. lamps, LED, dimmer), and input devices (e.g. sensors, pushbuttons), the method comprising the steps:
providing a set (e.g. a list) of discovered, unassigned input devices and a set (e.g. separate list) of engineered input devices by the DALI application controller (DAC), wherein access to the respective sets is provided by a suitable commissioning tool;
selecting a DALI input device from the set of engineered devices displayed by the commissioning tool by a commissioner, wherein this selection is triggering a message from the commissioning tool to the DALI Application Controller which starts monitoring the event messages from not-yet-assigned input devices on the DALI network which type correspond to the type of the input device selected by the commissioner and wherein this selection is starting a timer, which defines the starting point of a defined time period (e.g. 5 seconds or 7 seconds or 8 seconds or 10 seconds or 15 seconds or 20 seconds) ;
activating an occupancy sensor (e.g. motion sensor) on the selected DALI input device by exposing the occupancy sensor to a movement of an object (e.g. hand movement, hand waving, gesture), wherein activating the occupancy sensor is triggering a DALI event message to the DALI application controller, wherein the occupancy sensor (MS) on the selected DALI input device is activated by exposing the occupancy sensor to the movement of the object (e.g. hand movement, hand waving, gesture) within the defined time period;
sending the DALI IDENTIFY DEVICE command to the DALI input device which triggered the DALI event message by the DALI application controller;
wherein after receiving the DALI IDENTIFY DEVICE command the DALI input device is outputting a visual signal (e.g. blinking or flashing) and/or an audio signal (e.g. beeping or sounding) to indicate that the correct DALI input device is selected;
confirming that the correct DALI input device is selected by the commissioner via the commissioning tool;
assigning a logical address within the DALI network to said correct DALI input device in the DALI application controller.

A second aspect of the invention is an arrangement for commissioning a DALI network (e.g. DALI bus) for control lighting in a building, the DALI network comprising a DALI application controller, control gears (e.g. lamps, LED, dimmer), and input devices (e.g. sensors, pushbuttons),
wherein the DALI application controller is configured to provide a set (e.g. a list) of discovered, unassigned input devices and a set (e.g. separate list) of engineered input devices,
wherein a commissioning tool is configured to provide access to the respective sets of discovered, unassigned input devices, and engineered input devices;
wherein a DALI input device from the set of engineered devices is displayed by the commissioning tool to be selected by a commissioner, wherein this selection is triggering a message from the commissioning tool to the DALI Application Controller which starts monitoring the event messages from not-yet-assigned input devices on the DALI network which type of input devices correspond to the type of the input device selected by the commissioner, and wherein this selection is also starting a timer, which defines the starting point of a defined time period;
wherein a DALI input device is comprising an occupancy sensor (e.g. motion sensor);
wherein the occupancy sensor of the selected DALI input device is configured to be activated by exposing the occupancy sensor to a movement of an object (e.g. hand movement, hand waving, gesture) within the defined time period;
wherein activating the occupancy sensor is triggering a DALI event message to the DALI application controller;
wherein the DALI application controller is configured to send the DALI IDENTIFY DEVICE command to the DALI input device which triggered the DALI event message;
wherein the DALI input device is configured after receiving the DALI IDENTIFY DEVICE command to output a visual and/or an audio signal to indicate that the correct DALI input device is selected;
wherein the commissioning tool is configured to confirm that the correct DALI input device is selected by the commissioner;
wherein a logical address within the DALI network is assigned to said correct DALI input device in the DALI application controller.

A third aspect of the invention is a DALI application controller, configured to perform a method for commissioning a DALI network (e.g. DALI bus) for control lighting detection in a building, the DALI network comprising a DALI application controller, control gears (e.g. lamps, LED, dimmer), and input devices (e.g. sensors, pushbuttons), the method comprising the steps:
providing a set (e.g. a list) of discovered, unassigned input devices and a set (e.g. separate list) of engineered input devices by the DALI application controller (DAC), wherein access to the respective sets is provided by a suitable commissioning tool;
selecting a DALI input device from the set of engineered devices displayed by the commissioning tool by a commissioner, wherein this selection is triggering a message from the commissioning tool to the DALI Application Controller which starts monitoring the event messages from not-yet-assigned input devices on the DALI network, wherein the type of these input devices corresponds to the type of the input device selected by the commissioner, and wherein this selection is starting a timer, which defines the starting point of a defined time period (e.g. 5 seconds or 7 seconds or 8 seconds or 10 seconds or 15 seconds or 20 seconds);
activating an occupancy sensor (e.g. motion sensor) on the selected DALI input device by exposing the occupancy sensor to a movement of an object (e.g. hand movement, hand waving, gesture), wherein activating the occupancy sensor is triggering a DALI event message to the DALI application controller, wherein the occupancy sensor (MS) on the selected DALI input device is activated by exposing the occupancy sensor to the movement of the object (e.g. hand movement, hand waving, gesture) within the defined time period;
sending the DALI IDENTIFY DEVICE command to the DALI input device which triggered the DALI event message by the DALI application controller;
wherein after receiving the DALI IDENTIFY DEVICE command the DALI input device is outputting a visual signal (e.g. blinking or flashing) and/or an audio signal (e.g. beeping or sounding) to indicate that the correct DALI input device is selected;
confirming that the correct DALI input device is selected by the commissioner via the commissioning tool;
assigning a logical address within the DALI network to said correct DALI input device in the DALI application controller.

Further aspects of the invention are a computer program product and a computer-readable storage medium comprising instructions which, when the program is executed by a computer, cause the computer to carry out the steps of the inventive method for commissioning a DALI network for control lighting in a building.

### BRIEF DESCRIPTION OF THE DRAWINGS

The above-mentioned and other concepts of the present invention will now be addressed with reference to the drawings of the preferred embodiments of the present invention. The shown embodiments are intended to illustrate, but not to limit the invention. The drawings contain the following figures, in which like numbers refer to like parts throughout the description and drawings and wherein:
- FIG 1: illustrates an exemplary flowchart of method for commissioning a DALI network for control lighting in a building;
- FIG 2: illustrates a first exemplary arrangement for commissioning a DALI network for control lighting in a building; and
- FIG 3: illustrates a second exemplary arrangement for commissioning a DALI network for control lighting in a building.

### DETAILED DESCRIPTION

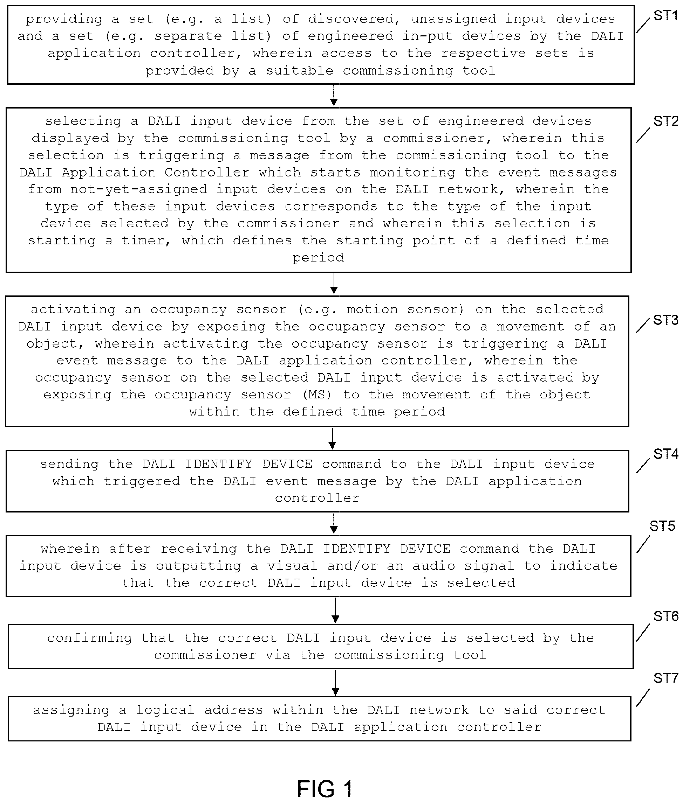

Figure 1 illustrates an exemplary flowchart of a method for commissioning a DALI network (e.g. DALI bus) for control lighting in a building, the DALI network (DN) comprising a DALI application controller (DAC), control gears (e.g. lamps, LED, dimmer), and input devices (e.g. sensors, pushbuttons), the method comprising the steps:
(ST1) providing a set (e.g. a list) of discovered, unassigned input devices and a set (e.g. separate list) of engineered input devices by the DALI application controller (DAC), wherein access to the respective sets is provided by a suitable commissioning tool;
(ST2) selecting a DALI input device from the set of engineered devices displayed by the commissioning tool by a commissioner, wherein this selection is triggering a message from the commissioning tool to the DALI Application Controller (DAC) which starts monitoring the event messages from not-yet-assigned input devices on the DALI network (DN), wherein the type of these input devices corresponds to the type of the input device selected by the commissioner (C), and wherein this selection is starting a timer, which defines the starting point of a defined time period (e.g. 5 seconds or 7 seconds or 8 seconds or 10 seconds or 15 seconds or 20 seconds);
(ST3) activating an occupancy sensor (e.g. motion sensor MS) on the selected DALI input device by exposing the occupancy sensor (MS) to a movement of an object (H) (e.g. hand movement, hand waving, gesture), wherein activating the occupancy sensor (MS) is triggering a DALI event message to the DALI application controller (DAC), wherein the occupancy sensor (MS) on the selected DALI input device is activated by exposing the occupancy sensor (MS) to the movement of the object (H) (e.g. hand movement, hand waving, gesture) within the defined time period;
(ST4) sending the DALI IDENTIFY DEVICE command to the DALI input device which triggered the DALI event message by the DALI application controller (DAC);
(ST5) wherein after receiving the DALI IDENTIFY DEVICE command the DALI input device is outputting a visual signal (e.g. blinking or flashing) and/or an audio signal (e.g. beeping or sounding) to indicate that the correct DALI input device is selected;
(ST6) confirming that the correct DALI input device is selected by the commissioner via the commissioning tool;
(ST7) assigning a logical address within the DALI network (DN) to said correct DALI input device in the DALI application controller. Advantageously the DALI Application Controller provides a list (e.g. a spreadsheet or csv-list) of discovered, unassigned input devices and a list (e.g. a separate list) of engineered input devices. This information is accessible by the commissioning tool. Advantageously the commissioning tool is implemented or realized on a laptop or a tablet computer).

The occupancy sensor (MS) on the selected DALI input device is activated by exposing the occupancy sensor (MS) to the movement of an object (H) (e.g. hand movement, hand waving, gesture, waving with an suitable object (e.g. stick)) and/or by exposing the occupancy sensor (MS) to the movement of a person, for instance the commissioner (C). The occupancy sensor (MS) can be realized as motion sensor or motion detector.

A motion detector is an electronic sensor that detects motion in its immediate environment and can be regarded as an electrical switch.

Motion detectors or motion sensors can use different technologies to detect motions in their immediate environment. Depending on the technology the range to detect motions differs. Motion detectors or motion sensors can be based on electromagnetic waves (RF, radio frequency, microwaves or Doppler radar), on ultrasound (ultrasonic motion detector), or on infrared.

The PIR sensor (pyroelectric sensor, pyroelectric infrared sensor) is the most commonly used type of sensor in motion detecting.

Advantageously the length of the defined time period is determined by configuring the DALI Application Controller (DAC) and/or the commissioning tool (CT). The commissioning tool (CT) can be realized on a smartphone or on a tablet computer by suitable software, communication, Input/Output, storage, and processing means.

Advantageously the timer is integrated or implemented in the DALI Application Controller or in the commissioning tool.

Activating the occupancy sensor (MS) on the selected DALI input device (ID1 - ID4) by exposing the occupancy sensor (MS) to the movement of an object (H) has to be performed before the timer expires.

This means feedback must be provided to the selected DALI input device by the commissioning engineer until the defined time period (e.g. 3 seconds or 5 seconds or 10 seconds or 15 seconds or 20 seconds) or a defined time out (e.g. 3 seconds or 5 seconds or 10 seconds or 15 seconds or 20 seconds) expires. The defined time period or the defined time out can be determined or configured by the commissioner with the commissioning tool and/or the DALI application controller.

The length or the span of the defined time period has to be chosen so that the commissioner can actually perform the operation "activating the switch". This can be done individually by each respective commissioner.

If the defined time period is too short and the timer expires before activating the occupancy sensor (MS), the DALI Application Controller can not find the selected input device. Advantageously a corresponding information is displayed to the commissioner on the commissioning tool.

According to an advantageous embodiment, the occupancy sensor (MS) on the selected DALI input device (ID1 - ID4) is activated by exposing the occupancy sensor (MS) to the movement of an object (H) at least for the defined time period without interruption of the movement.
According to an advantageous embodiment, the occupancy sensor (MS) on the selected DALI input device (ID1 - ID4) is activated by a defined movement pattern (e.g. special hand gesture) .

According to an advantageous embodiment, activating the occupancy sensor (MS) is triggering a defined number of DALI event messages to the DALI application controller (DAC).

According to an advantageous embodiment, activating the occupancy sensor (MS) is triggering at least a defined number (e.g. 3 messages or 5 messages) of DALI event messages to the DALI application controller (DAC).

According to an advantageous embodiment, the set of discovered and unassigned input devices and the set of engineered input devices is updated accordingly.

According to an advantageous embodiment, an output device (e.g. display) of the commissioning tool (CT) is presenting a successful assigning of a logical address.

According to an advantageous embodiment, providing the set of discovered, unassigned input devices and the set of engineered input devices is performed automatically by the DALI application controller (DAC). Advantageously the update of the lists is performed automatically if a change of the sets is discovered.

The commissioning tool and the DALI application controller comprise suitable processor means, memory means, input/output means, and communications means.

This reliably prevents faulty connections, especially if many devices are set up simultaneously by several commissioning engineers.

The proposed workflow provides a significant efficiency advantage compared to IEC 62386-103 workflow, where for every input device up to 64 interactions are required. Shorter commissioning time translates to lower cost of commissioning.

The proposed workflow with the visual/auditive feedback of the selected device prevents nearly all types of erroneous assignment. Not having to find and correct such errors further reduces the required commissioning time and cost.

Advantageously a DALI application controller and a commissioning device are configured to perform the method steps described above and illustrated in figure 1.

Further aspects of the invention are a computer program product and a computer-readable storage medium or data carrier (e.g. USB stick, CD, optical disc) comprising instructions which, when the program is executed by a computer, cause the computer to carry out the steps of the inventive method for commissioning a DALI network for control lighting in a building described above. The computer (e.g. laptop, smartphone) comprises suitable software and hardware means (processor, storage media, communication means, I/O means) to perform the method. The computer program product is implemented in a suitable programming language.

The computer program product can comprise instructions which can be executed on a processor of the DALI application controller to perform the inventive method for commissioning a DALI network. A further computer program product can comprise instructions which can be executed on a processor of the commissioning tool (e.g. smartphone or tablet computer) to perform the inventive method for commissioning the DALI network. The DALI application controller and the commissioning tool are communicating and cooperating to perform the inventive method for commissioning the DALI network. The further computer program product for the commissioning tool can be an App. The App can be provided for the commissioning tool by a download from an Appstore.

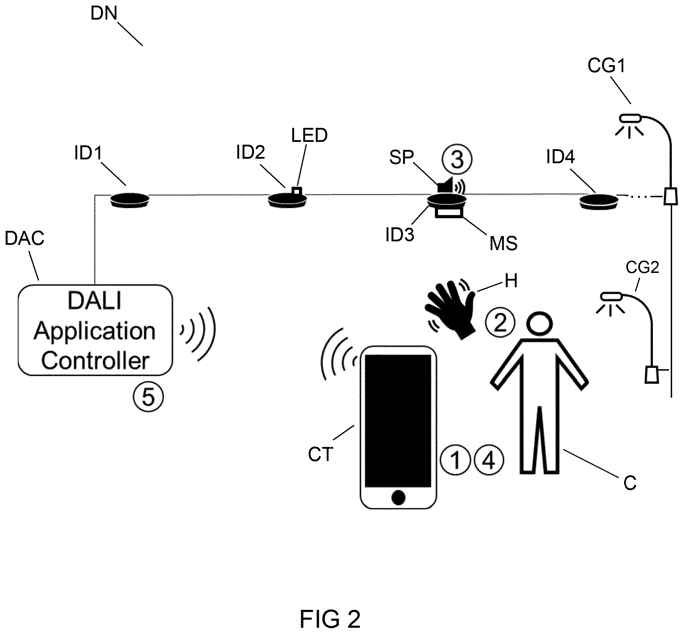

Figure 2 illustrates a first exemplary arrangement for commissioning a DALI network DN (e.g. DALI bus) for control lighting in a building, the DALI network DN comprising a DALI application controller DAC, control gears CG1, CG2 (e.g. lamps, LED, dimmer), and input devices ID1 - ID4 (e.g. sensors, pushbuttons),
wherein the DALI application controller DAC is configured to provide a set (e.g. a list) of discovered, unassigned input devices and a set (e.g. separate list) of engineered input devices,
wherein a commissioning tool CT is configured to provide access to the respective sets of discovered, unassigned input devices, and engineered input devices;
wherein a DALI input device ID1 - ID4 from the set of engineered devices is displayed by the commissioning tool CT to be selected by a commissioner C, wherein this selection is triggering a message from the commissioning tool CT to the DALI Application Controller DAC which starts monitoring the event messages from not-yet-assigned input devices on the DALI network DN, wherein the type of input devices corresponds to the type of the input device selected by the commissioner C, and wherein this selection is also starting a timer, which defines the starting point of a defined time period;
wherein a DALI input device ID1 - ID4 is comprising an occupancy sensor MS;
wherein the occupancy sensor MS of the selected DALI input device ID1 - ID4 is configured to be activated by exposing the occupancy sensor MS to a movement of an object H (e.g. hand movement, hand waving, gesture) within the defined time period;
wherein activating the occupancy sensor MS is triggering a DALI event message to the DALI application controller DAC;
wherein the DALI application controller DAC is configured to send the DALI IDENTIFY DEVICE command to the DALI input device ID1 - ID4 which triggered the DALI event message;
wherein the DALI input device ID1 - ID4 is configured after receiving the DALI IDENTIFY DEVICE command to output a visual and/or an audio signal to indicate that the correct DALI input device ID1 - ID4 is selected;
wherein the commissioning tool CT is configured to confirm that the correct DALI input device is selected by the commissioner C;
wherein a logical address within the DALI network DN is assigned to said correct DALI input device ID1 - ID4 in the DALI application controller DAC. The commissioning tool CT and the DALI application controller DAC comprise respective suitable processor means, memory means, input/output means, and communications means. Advantageously the commissioning tool CT is implemented on a portable device, e.g. a laptop or a tablet computer. Advantageously the DALI Application Controller DAC provides a list (e.g. a spreadsheet or csv-list) of discovered, unassigned input devices and a list (e.g. a separate list) of engineered input devices. This information is accessible by the commissioning tool CT.

Advantageously the commissioner C is the only person in the DALI area and providing the movement of the object H (e.g. hand movement, hand waving, gesture) by its own.

Optionally, the commissioner C can also instruct another person (e.g. by suitable instructions (e.g. shouting)) to perform the corresponding movement of the object H.

DALI is specified by a series of technical standards in IEC 62386. This ensures that equipment from different manufacturers will interoperate in DALI systems (DALI networks) DN.

A DALI network DN typically comprises at least one DALI application controller DAC, a network (e.g. bus) power supply, input devices ID1 - ID4 (e.g. sensors and push-buttons), control gear (e.g. LED drivers or dimmers) with DALI interfaces. A DALI application controller DAC can control, configure or query each network device by means of a bi-directional data exchange. The DALI protocol allows addressing the network devices individually, in groups or via broadcast.

Each device in a DALI network DN is assigned a unique short address between 0 to 63, making up to 64 control gear devices CG1, CG2 in a basic DALI system. Address assignment to devices in a DALI network DN is accomplished over the bus using a "commissioning" protocol, usually after all hardware of the DALI system (DALI network DN) is installed. In a DALI network DN data is transferred between devices by means of an asynchronous, half-duplex, serial protocol over a two-wire bus with a fixed data transfer rate of 1200 bit/s. A DALI network DN can be arranged in bus or star topology, or a combination of these. Each device on a DALI network DN can be addressed individually.

The exemplary illustration according to figure 2 shows lamps CG1, CG2 as exemplary control gears. A DALI network DN can comprise a plurality of control gears (e.g. lamps, LED, dimmer), also control gears of different types.

The occupancy sensor MS on the selected DALI input device is activated by exposing the occupancy sensor MS to the movement of an object H (e.g. hand movement, hand waving, gesture, waving with an suitable object (e.g. stick)) and/or by exposing the occupancy sensor MS to the movement of a person, for instance the commissioner C. The occupancy sensor MS can be realized as motion sensor or motion detector.

A motion detector is an electronic sensor that detects motion in its immediate environment and can be regarded as an electrical switch.

Motion detectors or motion sensors MS can use different technologies to detect motions in their immediate environment. Depending on the technology the range to detect motions differs. Motion detectors or motion sensors can be based on electromagnetic waves (RF, radio frequency, microwaves or Doppler radar), on ultrasound (ultrasonic motion detector), or on infrared.

The PIR sensor (pyroelectric sensor, pyroelectric infrared sensor) is the most commonly used type of sensor in motion detecting.

According to an advantageous embodiment, the length of the defined time period is determined by configuring the DALI application controller DAC and/or the commissioning tool CT. The commissioning tool CT can be realized on a smartphone or on a tablet computer by suitable software, communication, Input/Output, storage, and processing means.

Advantageously the timer is integrated or implemented in the DALI Application Controller DAC or in the commissioning tool CT.

Advantageously the DALI application controller DAC and/or the commissioning tool CT are comprising a timer to provide the defined time period.

Advantageously the occupancy sensor MS is configured to be activated by exposing the occupancy sensor MS to the movement of an object (H) at least for the defined time period (e.g. 10 seconds, 15 seconds, 20 seconds, 30 seconds) without interruption of the movement.

Advantageously the occupancy sensor MS is configured to be activated by a defined movement pattern (e.g. special hand gesture) .

Advantageously activating the occupancy sensor MS is triggering a defined number (e.g. 3 messages or 5 messages) of DALI event messages to the DALI application controller DAC. Advantageously exactly the defined number (e.g. 3 messages or 5 messages) of DALI event messages is triggered when activating the occupancy sensor MS.

Advantageously activating the occupancy sensor MS is triggering at least a defined number (e.g. minimum 3) of DALI event messages to the DALI application controller DAC.

Advantageously the set of discovered and unassigned input devices and the set (e.g. list) of engineered input devices is updated accordingly. Advantageously the update of the set is performed automatically if a change of the respective set is discovered.

According to an advantageous embodiment, an output device (monitor, display) of the commissioning tool CT is presenting a successful assigning of a logical address.

According to an advantageous embodiment, providing the set (e.g. a list) of discovered, unassigned input devices and the set (e.g. separate list) of engineered input devices is performed automatically by the DALI application controller DAC. Advantageously the update of the lists is performed automatically if a change of the sets is discovered. Advantageously the DALI application controller DAC is commissioned with a handheld device as a commissioning tool CT (e.g. tablet computer, smartphone, laptop, mobile or desktop computer). Prior to the logical device assignment, advantageously the DALI application controller DAC performs random address allocation as defined in IEC 62386-103 section 9.14.2.

The DALI application controller DAC provides a list of discovered, unassigned input devices and a separate list of engineered input devices. This information is accessible by the commissioning tool CT via suitable communication means (e.g. WLAN, radio communication, IP communication).

In the arrangement as illustrated in figure 2 the exemplary input device ID3 comprises an exemplary speaker SP for sending an audio signal (e.g. beeping or sounding or buzzing). Optionally the audio signal can also be replaced by a visual signal (e.g. by a flasher or blinker sending unit). Optionally the audio signal and the visual signal can be outputted together (means simultaneously) by the exemplary input device.

In the arrangement as illustrated in figure 2 the exemplary input device ID2 comprises an exemplary lamp LED as output-unit to output a visual signal. The output-unit LED to output a visual signal can be a flasher or a blinker sending unit or an indicator light.

The exemplary input devices ID1 to ID4 can comprise in each case an exemplary speaker SP and/or an exemplary light-output-unit LED.

The arrangement as illustrated in figure 2 is configured to perform a logical assignment of input devices ID1 - ID4 to control gears CG1, CG2 by performing the following workflow of actions (steps, points) 1 to 5:
1. The commissioner C selects a DALI input device ID4 - ID4 from the list of engineered devices displayed by the commissioning tool CT. This triggers a message from the commissioning tool CT to the DALI Application Controller DAC which starts monitoring the event messages from not-yet-assigned input devices on the DALI bus or DALI network DN.
2. The commissioner C triggers movement for the occupancy sensor or motion sensor MS (by waving a hand, etc.) during for instance 5 seconds or 10 seconds or 15 seconds. This triggers a defined number (for instance at least 3) of DALI movement event messages that the DALI Application Controller DAC receives to identify the device to be assigned.
3. The DALI Application Controller DAC sends the IDENTIFY DEVICE command to the input device which triggered the event messages. The addressed input devices blinks and/or beeps.
4. The commissioner C gets the visual and/or audible confirmation that the correct device is selected. This can be confirmed via commissioning tool CT.
5. After the confirmation the DALI Application Controller DAC completes the logical assignment. The list of discovered & unassigned input devices and the separate list of engineered input devices is updated accordingly. And the screen (e.g. display) on the commissioning tool CT is updated to indicate the successful assignment. The commissioner C can continue with the logical assignment of the next input device from point 1.

Advantageously the commissioner is the only person in the DALI area.

Many DALI occupancy sensors or motion sensors MS are combined with a light sensor into a single DALI input device ID1 - ID4. Should someone else interact with another not-yet-assigned occupancy sensor during the logical assignment sequence long enough for it to generate for example at least 3 movement events, the DALI Application Controller detects events from multiple input devices and the sequence is interrupted to prevent erroneous assignment. The commissioning tool CT (e.g. smartphone or tablet computer) displays an error message for the logical assignment, and the commissioner C can restart the logical assignment sequence.

The proposed exemplary workflow provides a significant efficiency advantage compared to IEC 62386-103 workflow, where for every input device up to 64 interactions are required. Shorter commissioning time translates to lower cost of Siemens solution. The proposed exemplary workflow with the visual/auditive feedback of the selected device prevents nearly all types of erroneous assignment. Not having to find and correct such errors further reduces the required commissioning time and cost.

The binary search workflow for gears CG1, CG2 reduces the assignment speed as well (interacting up to 6 times to assign one of 64 devices instead of iterating up to 64 times). The proposed workflow triggers the IDENTIFY DEVICE command only once removing the risk of errors. Moreover, with a single interaction with the input device, the proposed workflow reduces assignment time even further.

The proposed workflow involves for instance two consecutive blinks but does not require specialized hardware (in many cases the build-in camera LED of the commissioning tool is enough). Moreover, the proposed workflow works with generic IEC 62386-304 input devices.

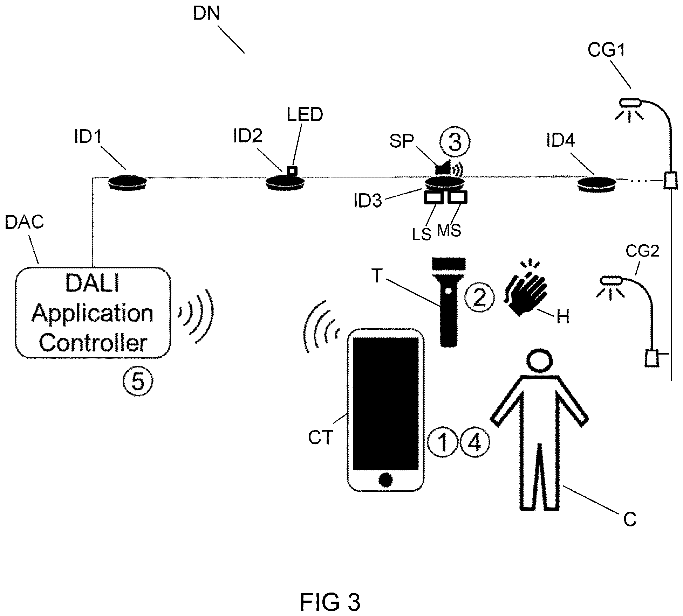

Figure 3 illustrates a second exemplary arrangement for commissioning a DALI network DN (e.g. DALI bus) for control lighting in a building, the DALI network DN comprising a DALI application controller DAC, control gears CG1, CG2 (e.g. lamps, LED, dimmer), and input devices ID1 - ID4 (e.g. sensors, pushbuttons),
wherein the DALI application controller DAC is configured to provide a set (e.g. a list) of discovered, unassigned input devices and a set (e.g. separate list) of engineered input devices,
wherein a commissioning tool CT is configured to provide access to the respective sets of discovered, unassigned input devices, and engineered input devices;
wherein a DALI input device ID1 - ID4 from the set of engineered devices is displayed by the commissioning tool CT to be selected by a commissioner C, wherein this selection is triggering a message from the commissioning tool CT to the DALI Application Controller DAC which starts monitoring the event messages from not-yet-assigned input devices on the DALI network DN, wherein the type of these input devices corresponds to the type of the input device selected by the commissioner C, and wherein this selection is also starting a timer, which defines the starting point of a defined time period;
wherein a DALI input device ID1 - ID4 is comprising an occupancy sensor MS and/or a light sensor LS;
wherein the occupancy sensor MS of the selected DALI input device ID1 - ID4 is configured to be activated by exposing the occupancy sensor MS to a movement of an object H (e.g. hand movement, hand waving, gesture) within the defined time period;
wherein the light sensor LS on the selected DALI input device ID1 - ID4 is configured to be activated by exposing the light sensor LS to a light source T within the defined time period;
wherein activating the occupancy sensor MS or the light sensor LS is triggering a DALI event message to the DALI application controller DAC;
wherein the DALI application controller DAC is configured to send the DALI IDENTIFY DEVICE command to the DALI input device ID1 - ID4 which triggered the DALI event message;
wherein the DALI input device ID1 - ID4 is configured after receiving the DALI IDENTIFY DEVICE command to output a visual and/or an audio signal to indicate that the correct DALI input device ID1 - ID4 is selected;
wherein the commissioning tool CT is configured to confirm that the correct DALI input device is selected by the commissioner C;
wherein a logical address within the DALI network DN is assigned to said correct DALI input device ID1 - ID4 in the DALI application controller DAC. The commissioning tool CT and the DALI application controller DAC comprise respective suitable processor means, memory means, input/output means, and communications means. Advantageously the commissioning tool CT is implemented on a portable device, e.g. a laptop or a tablet computer. Advantageously the DALI Application Controller DAC provides a list (e.g. a spreadsheet or csv-list) of discovered, unassigned input devices and a list (e.g. a separate list) of engineered input devices. This information is accessible by the commissioning tool CT.

DALI is specified by a series of technical standards in IEC 62386. This ensures that equipment from different manufacturers will interoperate in DALI systems (DALI networks) DN.

A DALI network DN typically comprises at least one DALI application controller DAC, a network (e.g. bus) power supply, input devices ID1 - ID4 (e.g. sensors and push-buttons), control gear (e.g. LED drivers or dimmers) with DALI interfaces. A DALI application controller DAC can control, configure or query each network device by means of a bi-directional data exchange. The DALI protocol allows addressing the network devices individually, in groups or via broadcast.

Each device in a DALI network DN is assigned a unique short address between 0 to 63, making up to 64 control gear devices CG1, CG2 in a basic DALI system. Address assignment to devices in a DALI network DN is accomplished over the bus using a "commissioning" protocol, usually after all hardware of the DALI system (DALI network DN) is installed. In a DALI network DN data is transferred between devices by means of an asynchronous, half-duplex, serial protocol over a two-wire bus with a fixed data transfer rate of 1200 bit/s. A DALI network DN can be arranged in bus or star topology, or a combination of these. Each device on a DALI network DN can be addressed individually.

The exemplary illustration according to figure 3 shows lamps CG1, CG2 as exemplary control gears. A DALI network DN can comprise a plurality of control gears (e.g. lamps, LED, dimmer), also control gears of different types.

The occupancy sensor MS on the selected DALI input device is activated by exposing the occupancy sensor MS to the movement of an object H (e.g. hand movement, hand waving, gesture, waving with an suitable object (e.g. stick)) and/or by exposing the occupancy sensor MS to the movement of a person, for instance the commissioner C. The occupancy sensor MS can be realized as motion sensor or motion detector.

A motion detector is an electronic sensor that detects motion in its immediate environment and can be regarded as an electrical switch.

Motion detectors or motion sensors MS can use different technologies to detect motions in their immediate environment. Depending on the technology the range to detect motions differs. Motion detectors or motion sensors can be based on electromagnetic waves (RF, radio frequency, microwaves or Doppler radar), on ultrasound (ultrasonic motion detector), or on infrared.

The PIR sensor (pyroelectric sensor, pyroelectric infrared sensor) is the most commonly used type of sensor in motion detecting.

According to an advantageous embodiment, the length of the defined time period is determined by configuring the DALI application controller DAC and/or the commissioning tool CT. The commissioning tool CT can be realized on a smartphone or on a tablet computer by suitable software, communication, Input/Output, storage, and processing means.

Advantageously the timer is integrated or implemented in the DALI Application Controller DAC or in the commissioning tool CT.

Advantageously the DALI application controller DAC and/or the commissioning tool CT are comprising a timer to provide the defined time period.

Advantageously the occupancy sensor MS is configured to be activated by exposing the occupancy sensor MS to the movement of an object (H) at least for the defined time period (e.g. 10 seconds, 15 seconds, 20 seconds, 30 seconds) without interruption of the movement.

Advantageously the occupancy sensor MS is configured to be activated by a defined movement pattern (e.g. special hand gesture) .

Advantageously activating the occupancy sensor MS is triggering a defined number (e.g. 3 messages or 5 messages) of DALI event messages to the DALI application controller DAC. Advantageously exactly the defined number (e.g. 3 messages or 5 messages) of DALI event messages is triggered when activating the occupancy sensor MS.

Advantageously activating the occupancy sensor MS is triggering at least a defined number (e.g. minimum 3) of DALI event messages to the DALI application controller DAC.

Advantageously the set of discovered and unassigned input devices and the set (e.g. list) of engineered input devices is updated accordingly. Advantageously the update of the set is performed automatically if a change of the respective set is discovered.

According to an advantageous embodiment, an output device (monitor, display) of the commissioning tool CT is presenting a successful assigning of a logical address.

According to an advantageous embodiment, providing the set (e.g. a list) of discovered, unassigned input devices and the set (e.g. separate list) of engineered input devices is performed automatically by the DALI application controller DAC. Advantageously the update of the lists is performed automatically if a change of the sets is discovered. Advantageously the DALI application controller DAC is commissioned with a handheld device as a commissioning tool CT (e.g. tablet computer, smartphone, laptop, mobile or desktop computer). Prior to the logical device assignment, advantageously the DALI application controller DAC performs random address allocation as defined in IEC 62386-103 section 9.14.2.

The DALI application controller DAC provides a list of discovered, unassigned input devices and a separate list of engineered input devices. This information is accessible by the commissioning tool CT via suitable communication means (e.g. WLAN, radio communication, IP communication).

In the arrangement as illustrated in figure 3 the exemplary input device ID3 comprises an exemplary speaker SP for sending an audio signal (e.g. beeping or sounding or buzzing). Optionally the audio signal can also be replaced by a visual signal (e.g. by a flasher or blinker sending unit). Optionally the audio signal and the visual signal can be outputted together (means simultaneously) by the exemplary input device.

In the arrangement as illustrated in figure 3 the exemplary input device ID2 comprises an exemplary lamp LED as output-unit to output a visual signal. The output-unit LED to output a visual signal can be a flasher or a blinker sending unit or an indicator light.

The exemplary input devices ID1 to ID4 can comprise in each case an exemplary speaker SP and/or an exemplary light-output-unit LED.

In the arrangement as illustrated in figure 3 the exemplary input device ID3 comprises a light sensor LS and an occupancy sensor (e.g. motion sensor) MS.

The light sensor LS of a selected DALI input device ID1 - ID4 can also be activated by suitable light sources T: torch, point light source, light beam, light ray, Infrared, etc. Advantageously the light source T is a point-shaped or beam-shaped light source. Further exemplary light sources T are laser pointer, e.g. 5mW laser pointer (green, 532 nm) with 3 mm Beam diameter, or 5mW laser pointer (red, 635 nm) with 3 mm Beam diameter.

Advantageously the light sensor LS on the selected DALI input device ID1 - ID4 is activated if exposed to a defined threshold value of luminous intensity (e.g. a defined value of luminance; luminance is candela per square metre (cd/m2)) provided by the light source T.

Advantageously the light sensor LS is activated when exposed to a defined sequence of light signals (e.g. light on - light off - light on - light off) provided by the light source T within the defined time period.

Advantageously the light sensor LS is activated when exposed to a significant difference in brightness compared to the current ambient light within the defined time period.

Advantageously by means of the light source T (e.g. a torch or a flashlight, etc.) a significant difference in brightness must be triggered one or more times during the defined time period (time window), e.g. flashing of the flashlight. The received readings of the event messages generated by the sensor must differ significantly one after the other in order to localize the sensor.

Small variations in brightness (below the defined threshold value) of the other sensors can also trigger event messages, which must be discarded for sensor localization by the DALI application controller DAC.

Advantageously the DALI application controller DAC and/or the commissioning tool CT are comprising a timer to provide the defined time period.

Advantageously the light sensor LS on the selected DALI input device ID1 - ID4 is configured to be activated by a guided light beam directed to the light sensor LS.

Advantageously the light sensor LS on the selected DALI input device ID1 - ID4 is configured to be activated by exposing the light sensor LS to the light source T within the defined time period (e.g. 10 seconds, 15 seconds, 20 seconds, 30 seconds) two times.

Advantageously the light sensor LS on the selected DALI input device ID1 - ID4 is configured to be activated by exposing the light sensor LS to a light source T exceeding a defined light intensity.

A further aspect of the invention is a method for commissioning a DALI network DN for control lighting in a building, the DALI network DN comprising a DALI application controller DAC, control gears CG1, CG22, and input devices ID1 - ID4, the method comprising the steps:
(ST1) providing a set of discovered, unassigned input devices and a set of engineered input devices ID1 - ID4 by the DALI application controller DAC, wherein access to the respective sets is provided by a suitable commissioning tool CT;
(ST2) selecting a DALI input device ID1 - ID4 from the set of engineered devices displayed by the commissioning tool CT by a commissioner C, wherein this selection is triggering a message from the commissioning tool CT to the DALI Application Controller DAC which starts monitoring the event messages from not-yet-assigned input devices on the DALI network DN and wherein this selection is starting a timer, which defines the starting point of a defined time period (e.g. 5 seconds or 7 seconds or 8 seconds or 10 seconds or 15 seconds or 20 seconds) ;
(ST3) activating an occupancy sensor (e.g. motion sensor MS) on the selected DALI input device ID1 - ID4 by exposing the occupancy sensor MS to a movement of an object H (e.g. hand movement, hand waving, gesture), wherein activating the occupancy sensor MS is triggering a DALI event message to the DALI application controller DAC, wherein the occupancy sensor (MS) on the selected DALI input device ID1 - ID4 is activated by exposing the occupancy sensor MS to the movement of the object H (e.g. hand movement, hand waving, gesture) within the defined time period;
   or
(ST3') activating a light sensor LS on the selected DALI input device ID1 - ID4 by exposing the light sensor LS to a light source T by the commissioner C, wherein activating the light sensor LS is triggering a DALI event message to the DALI application controller DAC, wherein the light sensor (LS) on the selected DALI input device (ID1 - ID4) is activated by exposing the light sensor LS to the light source T within the defined time period;
(ST4) sending the DALI IDENTIFY DEVICE command to the DALI input device ID1 - ID4 which triggered the DALI event message by the DALI application controller DAC;
(ST5) wherein after receiving the DALI IDENTIFY DEVICE command the DALI input device ID1 - ID4 is outputting a visual signal (e.g. blinking or flashing) and/or an audio signal (e.g. beeping or sounding) to indicate that the correct DALI input device ID1 - ID4 is selected;
(ST6) confirming that the correct DALI input device is selected by the commissioner C via the commissioning tool CT;
(ST7) assigning a logical address within the DALI network (DN) to said correct DALI input device ID1 - ID4 in the DALI application controller DAC.

A Method and an arrangement for commissioning a DALI network for control lighting in a building, the DALI network comprising a DALI application controller, control gears, and input devices, wherein the DALI application controller provides a set of discovered, unassigned input devices and a set of engineered input devices, wherein a commissioning tool provides access to the respective sets of discovered, unassigned input devices, and engineered input devices. The method and the arrangement are in in particular applicable to commission DALI-2 occupancy sensors.

### Reference Signs

- DN: DALI Network
- ID1 - ID4: Input Device
- H: Hand
- T: Torch
- MS: Motion Sensor
- LS: Light Sensor
- DAC: DALI Application Controller
- CG1, CG2: Control Gear
- SP: Speaker
- LED: Light Output Unit
- CT: Commissioning Tool
- C: Commissioner
- ST1 - ST7, 1 - 5: Step

## Claims

1. A method for commissioning a DALI network (DN) for control lighting in a building, the DALI network (DN) comprising a DALI application controller (DAC), control gears (CG1, CG2), and input devices (ID1 - ID4), the method comprising the steps:
(ST1) providing a set of discovered, unassigned input devices and a set of engineered input devices (ID1 - ID4) by the DALI application controller (DAC), wherein access to the respective sets is provided by a suitable commissioning tool (CT) ;
(ST2) selecting a DALI input device (ID1 - ID4) from the set of engineered devices displayed by the commissioning tool (CT) by a commissioner (C), wherein this selection is triggering a message from the commissioning tool (CT) to the DALI Application Controller (DAC) ), wherein the DALI Application Controller (DAC) starts monitoring the event messages from not-yet-assigned input devices on the DALI network (DN) which type corresponds to the type of the input device selected by the commissioner and wherein this selection is starting a timer, which defines the starting point of a defined time period;
(ST3) activating an occupancy sensor (e.g. motion sensor MS) on the selected DALI input device (ID1 - ID4) by exposing the occupancy sensor (MS) to a movement of an object (H) (e.g. hand movement, hand waving, gesture), wherein activating the occupancy sensor (MS) is triggering a DALI event message to the DALI application controller (DAC), wherein the occupancy sensor (MS) on the selected DALI input device (ID1 - ID4) is activated by exposing the occupancy sensor (MS) to the movement of the object (H) within the defined time period;
(ST4) sending the DALI IDENTIFY DEVICE command to the DALI input device (ID1 - ID4) which triggered the DALI event message by the DALI application controller (DAC);
(ST5) wherein after receiving the DALI IDENTIFY DEVICE command the DALI input device (ID1 - ID4) is outputting a visual and/or an audio signal to indicate that the correct DALI input device (ID1 - ID4) is selected;
(ST6) confirming that the correct DALI input device is selected by the commissioner (C) via the commissioning tool (CT) ;
(ST7) assigning a logical address within the DALI network (DN) to said correct DALI input device (ID1 - ID4) in the DALI application controller (DAC).

2. The method according to claim 1, wherein the defined time period is determined by configuring the DALI Application Controller (DAC) and/or the commissioning tool (CT).

3. The method according to claim 1 or claim 2, wherein the occupancy sensor (MS) on the selected DALI input device (ID1 - ID4) is activated by exposing the occupancy sensor (MS) to the movement of an object (H) at least for the defined time period without interruption of the movement.

4. The method according to one of the preceding claims, wherein the occupancy sensor (MS) on the selected DALI input device (ID1 - ID4) is activated by a defined movement pattern (e.g. special hand gesture).

5. The method according to one of the preceding claims, wherein activating the occupancy sensor (MS) is triggering a defined number of DALI event messages to the DALI application controller (DAC).

6. The method according to one of the preceding claims, wherein activating the occupancy sensor (MS) is triggering at least a defined number (e.g. 3 messages) of DALI event messages to the DALI application controller (DAC).

7. The method according to one of the preceding claims, wherein the set of discovered and unassigned input devices and the set of engineered input devices is updated accordingly.

8. The method according to one of the preceding claims, wherein an output device (e.g. display) of the commissioning tool (CT) is presenting a successful assigning of a logical address.

9. The method according to one of the preceding claims, wherein providing the set of discovered, unassigned input devices and the set of engineered input devices is performed automatically by the DALI application controller (DAC).

10. An arrangement for commissioning a DALI network (DN) for control lighting in a building, the DALI network (DN) comprising a DALI application controller (DAC), control gears (CG1, CG2), and input devices (ID1 - ID4),
wherein the DALI application controller (DAC) is configured to provide a set of discovered, unassigned input devices and a set of engineered input devices,
wherein a commissioning tool (CT) is configured to provide access to the respective sets of discovered, unassigned input devices, and engineered input devices;
wherein a DALI input device (ID1 - ID4) from the set of engineered devices is displayed by the commissioning tool (CT) to be selected by a commissioner (C), wherein this selection is triggering a message from the commissioning tool (CT) to the DALI Application Controller (DAC), wherein the DALI Application Controller (DAC) starts monitoring the event messages from not-yet-assigned input devices on the DALI network (DN) which type of input devices corresponds to the type of the input device selected by the commissioner (C), and wherein this selection is also starting a timer, which defines the starting point of a defined time period;
wherein a DALI input device (ID1 - ID4) is comprising an occupancy sensor (MS);
wherein the occupancy sensor (MS) of the selected DALI input device (ID1 - ID4) is configured to be activated by exposing the occupancy sensor (MS) to a movement of an object (H) (e.g. hand movement, hand waving, gesture) within the defined time period;
wherein activating the occupancy sensor (MS) is triggering a DALI event message to the DALI application controller (DAC) ;
wherein the DALI application controller (DAC) is configured to send the DALI IDENTIFY DEVICE command to the DALI input device (ID1 - ID4) which triggered the DALI event message;
wherein the DALI input device (ID1 - ID4) is configured after receiving the DALI IDENTIFY DEVICE command to output a visual and/or an audio signal to indicate that the correct DALI input device (ID1 - ID4) is selected;
wherein the commissioning tool (CT) is configured to confirm that the correct DALI input device is selected by the commissioner (C);
wherein a logical address within the DALI network (DN) is assigned to said correct DALI input device in the DALI application controller (DAC).

11. The arrangement according to claim 10, wherein the defined time period is determined by configuring the DALI Application Controller (DAC) and/or the commissioning tool (CT).

12. The arrangement according claim 10 or claim 11, wherein the occupancy sensor (MS) is configured to be activated by exposing the occupancy sensor (MS) to the movement of an object (H) at least for the defined time period (e.g. 5 sec, 7 sec, 8 sec, 10 sec) without interruption of the movement.

13. The arrangement according to one of the preceding claims 10 to 12, wherein the occupancy sensor (MS) is configured to be activated by a defined movement pattern (e.g. special hand gesture).

14. The arrangement according to one of the preceding claims 10 to 13, wherein activating the occupancy sensor (MS) is triggering a defined number (e.g. 3) of DALI event messages to the DALI application controller (DAC).

15. The arrangement according to one of the preceding claims 10 to 14, wherein activating the occupancy sensor (MS) is triggering at least a defined number (e.g. minimum 3) of DALI event messages to the DALI application controller (DAC).

16. The arrangement according to one of the preceding claims 10 to 15, wherein the set of discovered and unassigned input devices and the set of engineered input devices is updated accordingly.

17. A DALI application controller (DAC), configured to perform a method according to one of the claims 1 to 9.

18. A Computer program product comprising instructions which, when the program is executed by a computer, cause the computer to carry out the steps of the method of one of the claims 1 to 9.

19. A computer-readable data carrier having stored thereon the computer program product of claim 17.
